# EUROPEAN PATENT SPECIFICATION

(11) **EP 0 477 346 B1**
(45) Date of publication and mention of the grant of the patent: **28.12.1994**
(21) Application number: 91908391.5
(22) Date of filing: 15.04.1991
(51) Int. Cl.: F28F 13/06, F28F 3/02

(54) **PLATE EVAPORATOR**
PLATTENVERDAMPFER
EVAPORATEUR A PLAQUES

(30) Priority: 17.04.1990 SE 9001353
(43) Date of publication of application: 01.04.1992
(73) Proprietor: ALFA-LAVAL THERMAL AB, 221 00 Lund (SE)
(72) Inventor: HALLGREN, Leif, S-223 67 Lund (SE)
(74) Representative: Lerwill, John
(86) International application number: PCT/SE91/00267
(87) International publication number: WO 91/16589

(56) References cited:
- DE-A- 2 109 346
- FR-A- 957 533
- GB-A- 1 339 542
- SE-B- 321 492
- SE-B- 420 020
- SE-B- 424 143
- SE-B- 426 653
- SE-B- 448 916
- SE-B- 458 805
- SE-C- 219 561
- US-A- 2 872 165
- US-A- 4 301 864
- US-A- 4 376 460
- US-A- 4 434 643

## Description

The present invention relates to a plate heat exchanger for heating a fluid, comprising a number of abutting heat transfer plates defining flow spaces between each other and provided with corrugation patterns of ridges and grooves, said ridges abutting each other in the flow spaces and forming a number of supporting points between adjacent heat transfer plates, wherein alternate flow spaces form first passages for said fluid and the remaining flow spaces form second passages for a heating fluid, which passages each has an inlet and an outlet.

The invention is particularly concerned with a heat exchanger intended for evaporating a fluid and in such a plate heat exchanger described in DE-A1 3721132, the main part of the heat transfer portion of each heat transfer plate has one and the same kind of corrugation pattern over its entire surface. This is ineffective with regard to the heat transfer capacity of the plate heat exchanger.

An object of the present invention is to increase the efficiency of a plate heat exchanger, and according to the invention there is provided a plate heat exchanger as initially described which is adapted for evaporating a fluid and wherein at least each alternate heat transfer plate has a number of zones with different corrugation patterns arranged in succession along the flow path of the fluid in each of the first passages, and said ridges and grooves of the heat transfer plates are so directed that in each first passage they cooperate to provide a flow resistance to the fluid and generated vapour, which decreases progressively along essentially the entire passage from its inlet to its outlet.

When a fluid flows through an evaporating passage and gradually evaporates, an increasing space is required for the produced vapour. It is difficult to provide for such increasing space requirement in a plate interspace, therefore a gradually increasing flow rate of the produced vapour must be accepted.

The above mentioned corrugation pattern of the heat transfer plates, which has, among others, a purpose of improving the efficiency of the plate heat exchanger, causes, however, a great flow resistance to the produced vapour. This means that a considerable pressure drop of the rapidly flowing vapour, and therefore the absolute pressure in the section of the evaporating passage in which the evaporation is intended to start, must be maintained rather high, i.e. the boiling point of the fluid must be maintained rather high.

A natural desire is that said boiling point should be kept as low as possible so that a heating fluid may have as low temperature as possible. At the same time it is a desire that the heat transfer plates should have the most efficient corrugation pattern possible for the heat transfer.

With a plate heat exchanger according to the invention a decreasing flow resistance in the flow direction is obtained in the evaporating passages for the fluid and generated vapour. A very efficient heat transfer to the fluid is thereby achieved in the beginning of the evaporating passages, despite the relatively low flow rate of the fluid, while an excessive flow resistance for produced vapour, i.e. far too great a pressure drop of said vapour, is avoided in the end of the evaporating passages. In practice this means that if a certain, previously used, plate size is maintained, it will be possible to reduce the total heat transfer surface and thereby the number of plates in a plate heat exchanger to obtain a certain evaporating task. In other words, through the invention a plate heat exchanger may be designed to provide an optimal heat transfer at a given saturation pressure for generated vapour. This is applicable to both a falling film evaporator and a climbing film evaporator.

It is previously known that the heat transfer between each of two heat transfer plates and a heat transfer fluid, flowing through a passage between the plates, is influenced by how the abutting corrugation ridges of the heat transfer plates cross each other and extend in relation to the flow direction of the heat transfer fluid. If the ridges cross each other with an obtuse angle, with respect to the flow direction of the fluid, a greater pressure drop of the fluid is obtained and a more efficient heat transfer is obtained than if the ridges cross each other with an acute angle, with respect to the flow direction of the fluid. In DE-A-2109346 there is described a plate heat exchanger assembled from plates having corrugations which cross, and having zones with different corrugation patterns arranged in succession along the plates in the flow direction. The different zones are produced by corresponding pressing tool elements and allow plates with different temperature ratios to be produced using a limited number of pressing tool elements.

In accordance with a preferred embodiment of the invention the design of the corrugation pattern of the heat transfer plates is such that the crossing ridges of cooperating heat transfer plates provide the reduction in flow resistance along the passages between the plates for fluid being evaporated.

In a plate heat exchanger arranged for climbing film evaporation, i.e. in which the heat transfer plates are arranged vertically and fluid to be evaporated is supplied to alternate plate interspaces at its lower portion, the height of the heat transfer plates has a crucial importance for the saturation pressure of the produced steam. It depends on the static pressure of the fluid in said plate interspace. Through the present invention maximum heat transfer can be effected at optimum height of the heat transfer plates.

The invention will now be described in more detail with reference to the accompanying drawings, in which:
Figure 1 is a schematic exploded view of a plate heat exchanger formed in accordance with the invention and comprising two units of heat transfer plates;
Figure 2 is a schematic front view of a first kind of heat transfer plate; and
Figure 3 is a schematic front view of a second kind of heat transfer plate.

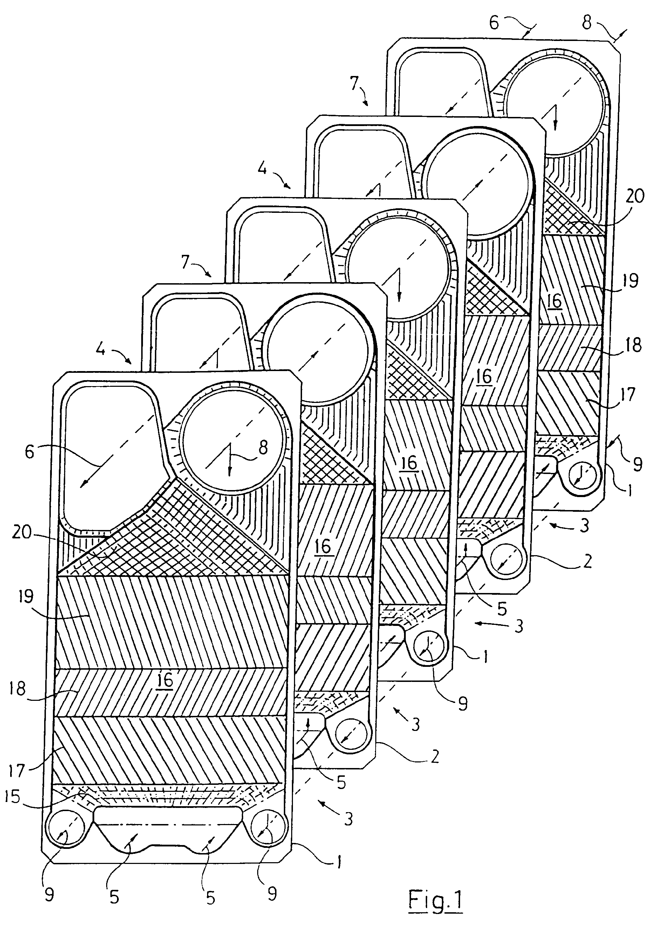

The plate heat exchanger shown in Figure 1 comprises two kinds of heat transfer plates 1,2 with different corrugation patterns, which heat transfer plates are intended to be kept together in a frame (not shown) in a conventional manner. The heat transfer plates 1 and 2 may in a conventional manner be provided with rubber gaskets along their edges to delimit flow spaces 3 therebetween, but as an alternative they could be permanently joined to each other, e.g. through soldering, welding or glueing.

The heat transfer plates 1 and 2 have been provided with a corrugation pattern in shape of ridges and grooves by means of pressing, the ridges of two adjacent heat transfer plates in the flow spaces 3 crossing and abutting each other to form a number of supporting points between the heat transfer plates. Every second flow space 3 forms a first passage 4 for evaporation of a fluid, which passage communicates with a fluid inlet 5 extending through a lower portion of the heat transfer plates and an outlet 6 for fluid and generated vapour, which extends through an upper portion of the heat transfer plates. Remaining flow spaces form second passages 7 for a heating fluid, which passages communicate with a steam inlet 8 extending through the upper portion of the heat transfer plates, and two condensate outlets 9 extending through the lower portion of the heat transfer plates.

The heat exchanger shown in Figure 1 is principally intended for evaporation or concentration of various liquid products by means of climbing film evaporation. The heat transfer plates 1 and 2 are arranged vertically, and fluid to be evaporated is intended to be supplied to the passages 4 at their lower portion and discharged at their upper portion. When counterflow heat exchange is preferred, the plate heat exchanger is arranged for use as a falling film evaporator with steam as heating medium being supplied at the upper portion of the passages 7 and condensate produced being discharged at the lower portion of the passages 7.

Each of the heat transfer plates 1 and 2 has a lower distribution area 15, a heat transferring portion 16, divided into discrete zones 17, 18 and 19 having different corrugation patterns, and an upper distribution area 20. The lower distribution area 15 is arranged to convey fluid in each passage 4, essentially vertically upwards from the inlet 5 to the heat transfer portion 16, and in each passage 7, to convey the condensate both vertically downwards and horizontally towards the outlets 9 on each side of the plate. The upper distribution area is formed in a manner which appears more closely in US 3783090.

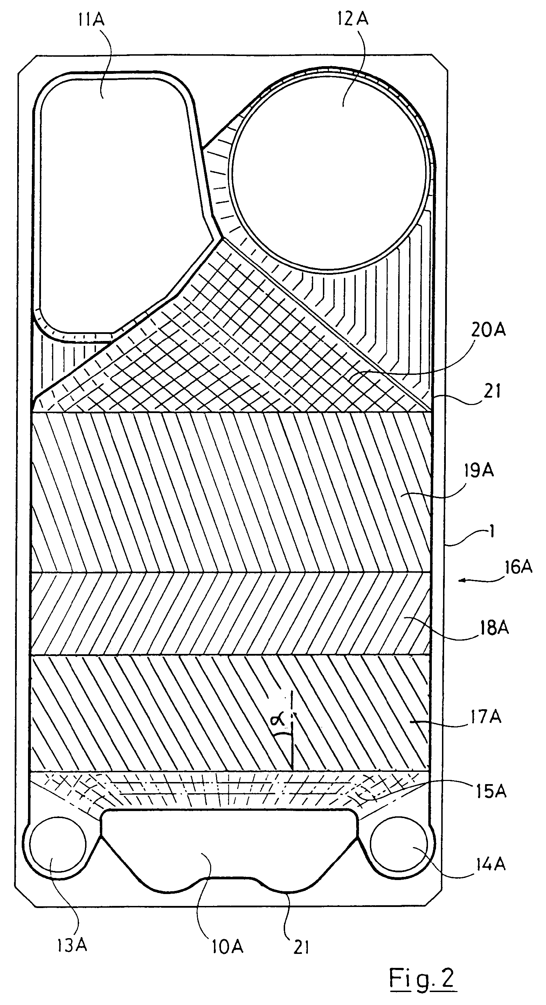

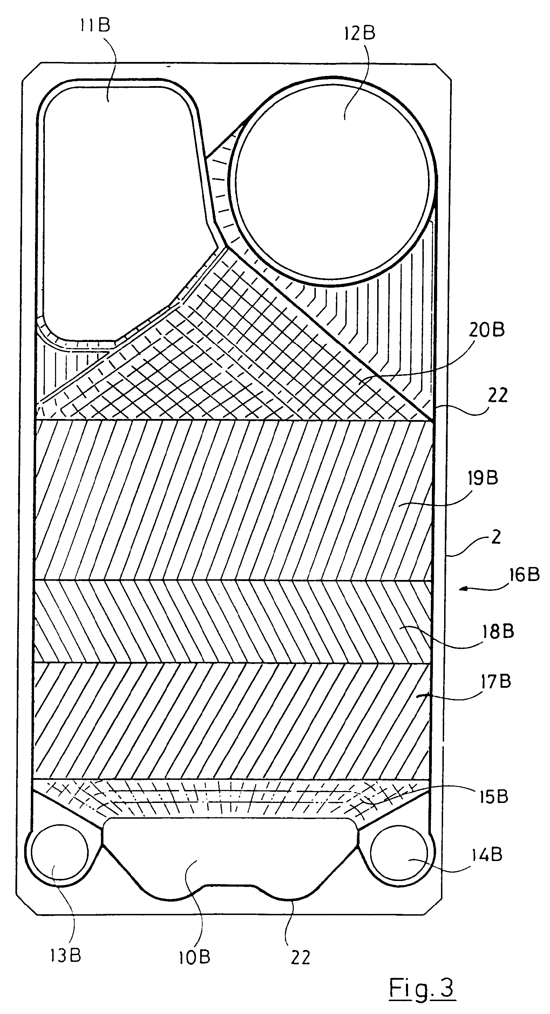

The heat transfer plates 1 and 2, shown in Figures 2 and 3, have an elongated rectangular shape and punched holes at each of its ends. These holes form a port 10A and 10B, respectively, at the bottom, for the fluid to be evaporated, a port 11A and 11B, respectively at the top, for concentrated fluid and generated vapour, a port 12A and 12B, respectively at the top for heating steam, and two ports 13A, 14A and 13B, 14B, respectively, at the bottom, for condensate and eventually uncondensed steam of the heating medium.

The heat transfer plates 1 and 2, have lower distribution areas 15A and 15B, respectively, upper distribution areas 20A and 20B, respectively and heat transfer portions 16A and 16B, respectively, which are divided into distinct zones 17A, 18A, 19A and 17B, 18B, 19B, respectively, having different corrugation patterns.

The heat transfer plate 1 (Figure 2) has on one of its sides grooves in which a unitary gasket 21 is received. The gasket extends around each of the ports 10A and 10B and around the whole periphery of the plate. Similarly, the heat exchange plate 2 (Figure 3) has grooves accommodating a gasket extending around each of the ports 12B, 13B and 14B and around the whole periphery of the plate. The gaskets 21 and 22 are arranged to seal between adjacent heat transfer plates 1 and 2. The gasket grooves can, as an alternative, be formed such that two adjacent plates may be welded together having the bottom of the grooves turned against each other, wherein only alternate plate interspaces are provided with gaskets, which in such a case is located in confronting grooves in the adjacent heat transfer plates.

In the corrugation zones 17A-19A and 17B-19B respectively, the ridges and the grooves incline differently against the intended main flow direction of the fluid. In particular the gradient decreases from one zone to another from below and upwards.

In the embodiment of the invention, as shown in the drawing of the plate 1 (Figure 2), an angle α between the main flow direction of the fluid and the direction of the corrugating ridges is about 30° in zone 17A, 25° in zone 18A and 20° in zone 19A. In plate 2 (Figure 3) the ridges of the zones 17B-19B form the same angles with the main flow direction of the fluid, but they extend in different directions to the ridges of zones 17A-19A of plate 1, so that the ridges of plate 1 will intersect and abut against the ridges of the plate 2. The value given for the angles α has been chosen with reference to a certain heat exchange task for the present heat exchanger. Other values can of course be chosen for other heat exchange tasks.

Fluid which is to be completely or partly evaporated is supplied into the plate heat exchanger through the fluid inlet 5 which is located in the lower portion of the heat transfer plates, and then flows upwards through the passage 4. Fluid is evenly distributed across the width of the heat transfer plates between the lower distribution areas 15A and 15B. In the heat transfer portion 16A and 16B the fluid first passes the zones 17A and 17B, which have a corrugation pattern providing a relatively great flow resistance, i.e. the ridges cross each other with a comparatively large intervening angle with respect to the flow direction of the fluid. Owing to the fact that this corrugation pattern provides a relatively large flow resistance vapour is generated relatively quickly in the passages 4. Fluid and generated vapour continue between the zones 18A and 18B and between the zones 19A and 19B, which have gradually decreasing angle between the crossing ridges, i.e. a more and more acute intervening angle is formed by the ridges with respect to the flow direction. The flow resistance for the fluid and generated vapour this decreases gradually in the flow direction of the passages 4. Fluid and generated vapour then continue to the upper distribution areas 20A and 20B and further through the outlet 6.

In the passages 7 for the heating medium, the flow is performed in the opposite direction. Steam is supplied through the steam inlet 8 and in the passages 7 is subjected to a gradually increasing flow resistance. In the figures two condensate outlets 9 are shown, however, only one may be used if desired.

In the embodiment of the invention shown in the drawings, both of the heat transfer plates 1 and 2 have several zones with different corrugation patterns. However, only one of the heat transfer plates may be provided with several different zones, while the whole of the other heat transfer plate has one and the same corrugation angle. In addition, the zones of the different heat transfer plates have been shown located directly opposite to each other, but as an alternative they could be located so that they only partly overlap each other. Also the number of zones and the size of the zones could of course vary.

## Claims

1. A plate heat exchanger for heating a fluid, comprising a number of abutting heat transfer plates (1,2) delimiting flow spaces between each other and provided with corrugation patterns of ridges and grooves, said ridges abutting each other in the flow spaces and forming a number of supporting points between adjacent heat transfer plates (1,2), wherein alternate flow spaces form first passages (4) for said fluid and remaining flow spaces form second passages (7) for a heating fluid, each passage having an inlet and an outlet, and at least each alternate heat transfer plate has a number of zones (17,18,19) with different corrugation patterns arranged in succession along the flow path of the fluid in each of the first passages (4), characterised in that the heat exchanger is adapted for evaporating a fluid and said ridges and grooves of the heat transfer plates are so directed that in each first passage (4) they cooperate to provide a flow resistance to the fluid and generated vapour, which decreases progressively along essentially the entire passage from its inlet to its outlet.

2. A plate heat exchanger according to claim 1, wherein the ridges of adjacent heat transfer plates intersectingly abut each other.

3. A plate heat exchanger according to claim 1 or 2, wherein the ridges and grooves of said zones (17,18,19) are inclined at an angle (α) to the intended main flow direction of the fluid in each first passage (4), and the angle (α) decreases from one zone to the next zone along the passage (4) from its inlet to its outlet.

4. A plate heat exchanger according to any one of the claims 1 to 3, wherein at least alternate heat transfer plates have at least two different zones (17,18,19), located in a heat transfer portion (16) of the heat transfer plate.

5. A plate heat exchanger according to any of the claims 1 to 4, wherein each of two adjacent heat transfer plates has zones with different corrugation patterns.

6. A plate heat exchanger according to claim 5, wherein each zone (17A,18A,19A) of one of the heat transfer plates is located directly opposite a respective zone (17B,18B,19B) of the other heat transfer plate.

## Patentansprüche

1. Plattenwärmetauscher zur Erwärmung eines Fluids, mit einer Anzahl von einander anliegenden Wärmeübertragungsplatten (1, 2), die Durchflußräume zwischen einander eingrenzen und mit Wellungsmustern aus Rippen und Vertiefungen versehen sind, wobei die Rippen in den Durchflußräumen gegenseitig zur Anlage kommen und eine Anzahl von Stützpunkten zwischen benachbarten Wärmeübertragungsplatten (1, 2) bilden, bei dem miteinander abwechselnde Durchflußräume erste Kanäle (4) für das Fluid und die übrigen Durchflußräume zweite Kanäle für ein wärmendes Fluid bilden, wobei jeder Kanal jeweils einen Einlaß und einen Auslaß hat, und bei dem zumindest jede abwechselnde Wärmeübertragungsplatte eine Anzahl von Zonen (17, 18, 19) mit unterschiedlichen Wellungsmustern aufweist, die in einer Reihe entlang des Strömungspfades des Fluids in jeder der ersten Passagen (4) angeordnet sind, dadurch gekennzeichnet, daß der Wärmetauscher zur Verdampfung eines Fluids gestaltet ist und die Rippen und Vertiefungen der Wärmeübertragungsplatten so gerichtet sind, daß sie in jedem ersten Kanal (4) zur Bereitstellung eines Strömungswiderstands für das Fluid und den entstandenen Dampf zusammenwirken, wobei der Strömungswiderstand in progressiver Weise entlang im wesentlichen des gesamten Kanals von seinem Einlaß bis zu seinem Auslaß abnimmt.

2. Plattenwärmetauscher nach Anspruch 1, bei dem die Rippen benachbarter Wärmeübertragungsplatten gegenseitig in sich kreuzender Weise aneinander zur Anlage kommen.

3. Plattenwärmetauscher nach Anspruch 1 oder 2, bei dem die Rippen und Vertiefungen der Zonen (17, 18, 19) in einem Winkel (α) in bezug auf die beabsichtigte Haupt-Strömungsrichtung des Fluids in jedem ersten Kanal (4) geneigt sind, und daß der Winkel (α) von einer Zone zu der nächsten Zone entlang des Kanals (4) von seinem Einlaß bis zu seinem Auslaß abnimmt.

4. Plattenwärmetauscher nach einem der Ansprüche 1 bis 3, bei dem zumindest miteinander abwechselnde Wärmeübertragungsplatten zumindest zwei unterschiedliche Zonen (17, 18, 19) aufweisen, die in einem Wärmeübertragungsabschnitt (16) der Wärmeübertragungsplatte gelegen sind.

5. Plattenwärmetauscher nach einem der Ansprüche 1 bis 4, bei dem jede von zwei benachbarten Wärmeübertragungsplatten Zonen mit unterschiedlichen Wellungsmustern aufweist.

6. Plattenwärmetauscher nach Anspruch 5, bei dem jede Zone (17A, 18A, 19A) einer der Wärmeübertragungsplatten direkt gegenüber einer entsprechenden Zone (17B, 18B, 19B) der anderen Wärmeübertragungsplatte gelegen ist.

## Revendications

1. Echangeur de chaleur à plaques destiné à chauffer un fluide, comprenant un certain nombre de plaques de transfert thermique attenantes (1, 2), définissant des espaces d'écoulement entre elles et dotées de configurations ondulées de crêtes et de bords, ces crêtes étant attenantes entre elles dans les espaces d'écoulement et formant un certain nombre de points du support entre les plaques de transfert thermique contiguës (1, 2), échangeur de chaleur à plaques dans lequel les espaces d'écoulement alternés forment des premiers passages (4) pour le fluide et les espaces d'écoulement restants forment des seconds passages (7) pour chauffer le fluide, chaque passage ayant une entrée et une sortie, et au moins chaque plaque de transfert thermique alternée possède un certain nombre de zones (17, 18, 19) avec des configurations ondulées différentes disposées en succession le long de la voie d'écoulement du fluide dans chacun des premiers passages (4), caractérisé en ce que l'échangeur de chaleur est apte à faire évaporer un fluide et les crêtes et gorges des plaques de transfert thermique sont dirigées de manière à coopérer dans chaque premier passage (4) pour conférer une résistance d'écoulement au fluide et à la vapeur produite, qui diminue progressivement, sensiblement, le long de la totalité du passage allant de son entrée à sa sortie.

2. Echangeur de chaleur à plaques selon la revendication 1, dans lequel les crêtes des plaques de transfert thermique contiguës sont attenantes entre elles en intersection.

3. Echangeur de chaleur à plaques selon la revendication 1 ou 2, dans lequel les crêtes et gorges des zones (17, 18, 19) sont inclinées selon un angle (α) par rapport à la direction d'écoulement principal souhaitée du fluide dans chaque premier passage (4) et l'angle (α) diminue à partir d'une zone vers la zone suivante le long du passage (4) à partir de sa sortie vers son entrée.

4. Echangeur de chaleur à plaques selon l'une quelconque des revendications 1 à 3, dans lequel au moins les plaques de transfert thermique alternées présentent au moins deux zones différentes (17, 18, 19), situées dans une portion de transfert thermique (16) de la plaque de transfert thermique.

5. Echangeur de chaleur à plaques selon l'une quelconque des revendications 1 à 4, dans lequel chacune des deux plaques de transfert thermique présente des zones avec des configurations ondulées différentes.

6. Echangeur de chaleur à plaques selon la revendication 5, dans lequel chaque zone (17A, 18A, 19A) de l'une des plaques de transfert thermique est située directement en opposition à une zone respective (17B, 18B, 19B) de l'autre plaque de transfert thermique.
